# EUROPÄISCHE PATENTSCHRIFT

(11) **EP 1 979 224 B1**
(45) Veröffentlichungstag und Bekanntmachung des Hinweises auf die Patenterteilung: **08.09.2010**
(21) Anmeldenummer: 07703103.7
(22) Anmeldetag: 29.01.2007
(51) Int. Cl.: B62L 3/02, B60T 11/16

(54) **BETÄTIGUNGSVORRICHTUNG UND AUSGLEICHSBEHÄLTER FÜR EINE BETÄTIGUNGSVORRICHTUNG**
ACTUATING DEVICE AND COMPENSATION RESERVOIR FOR AN ACTUATING DEVICE
DISPOSITIF D'ACTIONNEMENT ET RÉSERVOIR DE COMPENSATION POUR DISPOSITIF D'ACTIONNEMENT

(30) Priorität: 30.01.2006 DE 102006004210
(43) Veröffentlichungstag der Anmeldung: 15.10.2008
(73) Patentinhaber: Gustav Magenwirth GmbH & Co. KG, 72574 Bad Urach (DE)
(72) Erfinder: RUOPP, Michael, 89180 Berghülen (DE)
(74) Vertreter: Friese, Martin
(86) Internationale Anmeldenummer: PCT/EP2007/000746
(87) Internationale Veröffentlichungsnummer: WO 2007/085487

(56) Entgegenhaltungen:
- EP-A2- 0 894 703
- WO-A-03/093084
- DE-U1-202005 003 033
- GB-A- 2 226 112
- US-A1- 4 200 163
- US-A1- 4 275 280

## Beschreibung

Die Erfindung betrifft eine Betätigungsvorrichtung gemäß dem Oberbegriff von Anspruch 1.

Eine Betätigungsvorrichtung gemäß dem Oberbegriff von Anspruch 1 ist aus der JP-7156853 bekannt.

Der bekannte Stand der Technik hat den Nachteil, dass der Verschwenkbereich bei einer losen Verbindung zwischen Ausgleichsbehälter und Armatur nicht begrenzt ist.

Der Erfindung liegt daher die Aufgabe zugrunde, eine Betätigungsvorrichtung gemäß dem Oberbegriff von Anspruch 1 anzugeben, die den Verschwenkbereich sicher begrenzt.

Die Aufgabe der Erfindung wird mit einer Betätigungsvorrichtung gemäß den Merkmalen von Anspruch 1 gelöst. Vorteilhafte Ausgestaltungen der Erfindung sind in den abhängigen Ansprüchen angegeben.

Die erfindungsgemäßen Betätigungsvorrichtungen bzw. Ausgleichsbehälter können gleichermaßen vorteilhaft für hydraulische Bremsanlagen oder hydraulische Kupplungen bevorzugt im Motorrad- oder Fahrradbereich eingesetzt werden. Prinzipiell ist die Erfindung hauptsächlich auf Fahrzeuge mit Lenkern gerichtet.

Gemäß einer Ausführung der Erfindung wird eine Betätigungsvorrichtung für eine hydraulische Fahrzeughandbremse oder Kupplungseinrichtung mit einer Armatur, die einen Geberzylinder und einen Befestigungsabschnitt zur Anordnung an einem Lenker aufweist, einem Ausgleichsbehälter für Hydraulikflüssigkeit, und Befestigungsmitteln zum Befestigen des Ausgleichsbehälters an der Armatur, wobei der Ausgleichsbehälter um eine Schwenkachse verschwenkbar ist, derart, dass der Ausgleichsbehälter innerhalb eines Verschwenkbereichs in verschiedenen Ausrichtungen relativ zu der Armatur an der Armatur befestigbar ist, wobei die Befestigungsmittel Sicherungsmittel zum Sichern des Ausgleichsbehälters an der Armatur umfassen, wobei die Sicherungsmittel eine Schraube umfassen, die in einem Langloch angeordnet ist, das den Schwenkbereich definiert.

Zusätzlich zu den Merkmalen betreffend die Verschwenkbarkeit können die Befestigungsmittel einen Stutzen und eine Stutzenaufnahme umfassen, wobei zur Befestigung des Ausgleichsbehälters der Stutzen in der Stutzenaufnahme aufgenommen ist. Dabei kann Stutzen in der Stutzenaufnahme um die Schwenkachse verschwenkbar aufgenommen sein. Alternativ oder zusätzlich kann der Stutzen an dem Ausgleichsbehälter und die Stutzenaufnahme an der Armatur angeordnet sein. Es ist auch möglich, dass der Stutzen an der Armatur und die Stutzenaufnahme an dem Ausgleichsbehälter angeordnet ist.

Zusätzlich zu den Merkmalen betreffend die Verschwenkbarkeit kann der Ausgleichsbehälter seitlich an der Armatur befestigt sein.

Bei einigen Ausführungen der Erfindung können die Befestigungsmittel Sicherungsmittel zum Sichern des Ausgleichsbehälters an der Armatur umfassen. Dabei können die Sicherungsmittel vorzugsweise eine Schraube umfassen, die in einem Langloch angeordnet ist, das den Schwenkbereich definiert. Dabei kann die Schraube zur Sicherung des Ausgleichsbehälters an der Armatur in ein Gewinde eingreifen, das an der Armatur ausgebildet ist, und das Langloch an dem Ausgleichsbehälter ausgebildet sein. Alternativ kann auch die Schraube zur Sicherung des Ausgleichsbehälters an der Armatur in ein Gewinde eingreift, das an dem Ausgleichsbehälter ausgebildet ist, und das Langloch an der Armatur ausgebildet ist. Selbstverständlich können auch äquivalente dem Fachmann bekannte Befestigungsmittel entsprechend eingesetzt werden.

Zusätzlich zu den Merkmalen betreffend die Verschwenkbarkeit können die Befestigungsmittel einen Bund aufweisen, der an einer Distanzhülse vorgesehen ist.

Dadurch ergibt sich der Vorteil, dass die Distanzhülse sehr dünnwandig ausgebildet werden kann, wodurch sich eine Einsparung von Gewicht bzw. Bauraum realisieren läßt. Außerdem kann sich gegebenenfalls eine leichtere Verstellbarkeit des Ausgleichsbehälters ergeben.

Bei einer Ausführung der Erfindung kann dabei vorzugsweise der Bund eine Abstützfläche für einen Abschnitt des Ausgleichsbehälters bieten. Das hat den Vorteil, dass der Bund über die Fläche der Armatur hinausragen kann, an der er sich abstützt. Es ergibt sich somit eine Vergrößerung der Abstützfläche, und nur ein kleinerer Bauraum wird benötigt.

Bei einigen Ausführungen der Erfindung können die Befestigungsmittel eine Distanzhülse umfassen. Dabei kann die Distanzhülse die Schraube zur Sicherung bzw. das entsprechende Sicherungsmittel umgeben. Vorteilhafterweise kann die Distanzhülse eine Wandstärke von 2/10 bis 20/10 mm, vorzugsweise 2/10 bis 10/10 mm, insbesondere vorzugsweise von ungefähr 4/10 mm aufweisen. Bei diesen Ausführungen ergibt sich der Vorteil, dass sie an bestehende Armaturen passen können bzw. dass relativ wenig Bauraum erforderlich ist.

Bei einigen Ausführungen der Erfindung kann der Verschwenkbereich einen Winkelbereich von 0 bis 90 Grad, vorzugsweise von 0 bis 45 Grad, insbesondere vorzugsweise von 0 bis 30 Grad, und bevorzugt von 0 bis ungefähr 21 Grad umfassen.

Bei einigen Ausführungen der Erfindung kann die relative Ausrichtung zwischen der Armatur und dem Ausgleichsbehälter innerhalb des Verschwenkbereichs stufenlos einstellbar sein.

Bei einigen Ausführungen der Erfindung kann die relative Ausrichtung zwischen der Armatur und dem Ausgleichsbehälter innerhalb des Verschwenkbereichs in einer bestimmten Anzahl von Einstellungen einstellbar sein. Dabei können mindestens 2, vorzugsweise mindestens 3, insbesondere vorzugsweise mindestens 5, mindestens 7 oder mindestens 10 Einstellungen vorgesehen sein. Dabei können vorzugsweise die Einstellungen durch Rastierungen definiert sein. Weiter können dabei vorzugsweise die Einstellungen durch eine Kontur definiert sein, die Bogenabschnitte umfasst, die in den Einstellungen einen Schraubenkopf der Befestigungsmittel aufnehmen. Beispielsweise können 3 Rastierungen, entsprechend drei Einstellungen durch 3 aufeinanderfolgende Radien, vorgesehen sein, die vorzugsweise am Ausgleichsbehälter ausgebildet sind. Alternativ können die Rastierungen auch an der Armatur ausgebildet sein, wenn die Befestigungsmittel in den Ausgleichsbehälter eingreifen.

Bei einigen Ausführungen der Erfindung kann die Armatur eine schrägradiale Armatur sein. Dabei kann der Neigungswinkel der schrägradialen Armatur ungefähr 5 bis 20 Grad und vorzugsweise ungefähr 10 Grad betragen.

Die Erfindung eignet sich für einen Ausgleichsbehälter einer Betätigungsvorrichtung mit einer Verbindungsbohrung und einer damit verbundenen Anschlussbohrung, wobei der Durchgang von der Anschlussbohrung zu der Verbindungsbohrung seitlich von der Mitte der Anschlussbohrung vorgesehen ist.

Zusätzlich oder alternativ zu den Merkmalen betreffend die Anordnung des Durchgangs kann der Ausgleichsbehälter zur seitlichen Befestigung an der Armatur ausgelegt und ausgebildet sein.

Zusätzlich oder alternativ zu den Merkmalen betreffend die Anordnung des Durchgangs kann die Anschlussbohrung an ihrem der Befestigungsseite des Ausgleichsbehälters abgewandten Ende eine Stufe aufweisen, in der der Durchgang zu der Verbindungsbohrung vorgesehen ist. Dabei kann die Stufe in Richtung ihres der Befestigungsseite des Ausgleichsbehälters abgewandten Endes vorzugsweise eine erhöhte Neigung aufweisen. Das hat den Vorteil, dass beim Spritzgießen kein Grat im Durchgang stehenbleibt, weil ein hoher Druck zwischen den beiden Kernen (dem Kern für die Verbindungsbohrung und dem Kern für die Anschlussbohrung) aufrechterhalten werden kann. Der Kern der Verbindungsbohrung rutscht auf dem Kern der Anschlussbohrung ab und von der Befestigungsseite weg. Der hohe Druck verhindert das Entstehen eines Grates, der nach dem Entformen stehenbleiben könnte. Ein Arbeitsschritt zum Entfernen eines etwaigen Grates, der den Durchgang blockiert, entfällt.

Bei einigen Ausführungen der Erfindung kann die Stufe einen ersten Abschnitt mit einer ersten Neigung und einen zweiten Abschnitt mit einer zweiten Neigung aufweisen, die größer als die erste Neigung ist. Dabei kann die Anschlussbohrung vorzugsweise im wesentlichen kegelstumpfförmig ausgebildet sein und die Neigung des ersten Abschnitts der Stufe ungefähr der Neigung der Anschlussbohrung entsprechen. Alternativ oder zusätzlich kann die Neigung des zweiten Abschnitts der Stufe in Richtung des der Befestigungsseite des Ausgleichsbehälters abgewandten Endes der Stufe eine zunehmende Steigung aufweisen. Entsprechend kann zusätzlich oder alternativ auch die Neigung des ersten Abschnitts der Stufe in Richtung des der Befestigungsseite des Ausgleichsbehälters abgewandten Endes der Stufe eine zunehmende Steigung aufweisen. Alternativ oder zusätzlich kann die Neigung des ersten Abschnitts der Stufe ungefähr 2 bis 5 Grad und vorzugsweise ungefähr 2 bis 3 Grad betragen. Alternativ oder zusätzlich kann die Neigung des zweiten Abschnitts der Stufe ungefähr 3 bis 30 Grad, vorzugsweise ungefähr 7 bis 20 Grad und insbesondere vorzugsweise 10 bis 15 Grad betragen.

Zusätzlich oder alternativ zu den Merkmalen betreffend die Anordnung des Durchgangs kann der Ausgleichsbehälter einen Fortsatz aufweisen, an dem ein Stutzen zur Befestigung an einer Armatur angeordnet ist. Dabei kann der Stutzen einen Abschnitt geringeren Durchmessers zur Aufnahme eines Dichtungslement aufweisen. Dabei kann an dem der Befestigungsseite des Ausgleichsbehälters zugewandten Endes des Abschnitts geringeren Durchmessers eine Erweiterung größeren Durchmessers vorgesehen sein. Dabei kann der Durchmesser der Erweiterung relativ zu dem Durchmesser des Abschnitts geringeren Durchmessers derart bemessen sein, dass einerseits die Erweiterung bei einem Spritzgussverfahren zur Herstellung des Ausgleichbehälters zwangsentformbar ist und andererseits ein Dichtungselement durch die Erweiterung relativ verliersicher auf dem Abschnitt geringeren Durchmessers anordbar ist. Das hat den Vorteil, dass kein separater Arbeitsgang erforderlich ist, um eine verliersichere Aufnahme für das Dichtungselement zu schaffen. Das Dichtungselement kann zur Montage des Ausgleichsbehälters auf diesem angeordnet werden. Das Dichtungselement wird relativ verliersicher gehalten, d.h. auf jeden Fall ausreichend sicher für die Montage.

Zusätzlich oder alternativ zu den Merkmalen betreffend die Anordnung des Durchgangs kann der Ausgleichsbehälter einen Fortsatz und eine daran angeordnete Versteifungsrippe aufweisen, wobei die Verbindungsbohrung in der Versteifungsrippe vorgesehen ist.

Zusätzlich oder alternativ zu den Merkmalen betreffend die Anordnung des Durchgangs kann der Ausgleichsbehälter eine Einstellvorrichtung zur Einstellung der relativen Ausrichtung des Ausgleichsbehälters an der Betätigungsvorrichtung innerhalb eines Verschwenkbereichs in einer bestimmten Anzahl von Einstellungen aufweisen. Dabei können mindestens 2, vorzugsweise mindestens 3, insbesondere vorzugsweise mindestens 5, mindestens 7 oder mindestens 10 Einstellungen vorgesehen sein. Alternativ oder zusätzlich können die Einstellungen durch Rastierungen definiert sein. Dabei können die Einstellungen durch eine Kontur definiert sein, die Bogenabschnitte umfasst, die in den Einstellungen einen Schraubenkopf von Befestigungsmitteln zur Befestigung des Ausgleichsbehälters an der Betätigungsvorrichtung aufnehmen.

Die Erfindung wird im Folgenden anhand des in den Figuren gezeigten Ausführungsbeispiels näher beschrieben.
- Fig. 1: zeigt eine erfindungsgemäße Betätigungsvorrichtung mit einem erfindungsgemäßen Ausgleichsbehälter von vorne in einer Einstellung des Schwenkwinkels.
- Fig. 1A: zeigt die Betätigungsvorrichtung von Fig. 1 in einer anderen Einstellung des Schwenkwinkels.
- Fig. 2: zeigt eine Schrägansicht der Betätigungsvorrichtung von Fig. 1.
- Fig. 3: zeigt Seitenansicht der Betätigungsvorrichtung von Fig. 1.
- Fig. 4: zeigt die Betätigungsvorrichtung von Fig. 1 mit demontierten Ausgleichsbehälter von vorne.
- Fig. 5: zeigt die Betätigungsvorrichtung von Fig. 1 mit demontierten Ausgleichsbehälter von oben.
- Fig. 6: zeigt eine Schrägansicht des demontierten Ausgleichsbehälters von Fig. 1 von schräg hinten.
- Fig. 7: zeigt den demontierten Ausgleichsbehälter von Fig. 1 von hinten.
- Fig. 8: zeigt eine Schrägansicht des demontierten Ausgleichsbehälters von Fig. 1 von schräg vorne.
- Fig. 9: zeigt eine Schnittansicht durch den demontierten Ausgleichsbehälter von Fig. 1.
- Fig. 10: zeigt eine Seitenansicht des demontierten Ausgleichsbehälters von Fig. 1 ohne Deckel.
- Fig. 11: zeigt eine Detailansicht des Stutzenbereichs des demontierten Ausgleichsbehälters von Fig. 1.

In der Beschreibung des Ausführungsbeispiels werden folgende Bezugszeichen verwendet:
- 10: Armatur
- 11: Geberzylinder
- 12: Befestigungsabschnitt
- 13: Aufnahme
- 14: Bügel
- 15: Hebel
- 16: Bohrung
- 22: Distanzhülse
- 23: Bund
- 24: Schraube
- 25: Schraubenkopf
- 26: Stutzenaufnahme
- 30: Ausgleichsbehälter
- 31: Zylinderwandung
- 32: Aussengewinde
- 33: Deckel
- 34: Boden
- 35: Rippe
- 36: Rippe
- 37: Membran
- 40: Fortsatz
- 41: Verstärkungsrippe
- 42: Aussparung
- 43: Langloch
- 50: Stutzen
- 51: erster Abschnitt
- 52: zweiter Abschnitt
- 53: Stufe
- 54: Erweiterung
- 56: Dichtungselement (insbesondere O-Ring)
- 60: Kontur
- 61: erster Bogenabschnitt (erste Rastierung)
- 62: zweiter Bogenabschnitt (zweite Rastierung)
- 63: dritter Bogenabschnitt (dritte Rastierung)
- 70: Verbindungsbohrung
- 71: Anschlussbohrung
- 72: Durchgang (von Anschlussbohrung zur Verbindungsbohrung)
- 73: Stufe
- 74: erster Abschnitt
- 75: zweiter Abschnitt

Das gezeigte Ausführungsbeispiel kann gleichermaßen als Betätigungsvorrichtung bzw. Ausgleichsbehälter für eine hydraulische Bremsanlage oder eine hydraulische Kupplung eingesetzt werden. Dargestellt ist das Ausführungsbeispiel an Hand einer Armatur für den rechten Lenkerteil. Ein Ausführungsbeispiel für den linken Lenkerteil erhält man auf bekannte Weise durch einen spiegelverkehrten Aufbau.

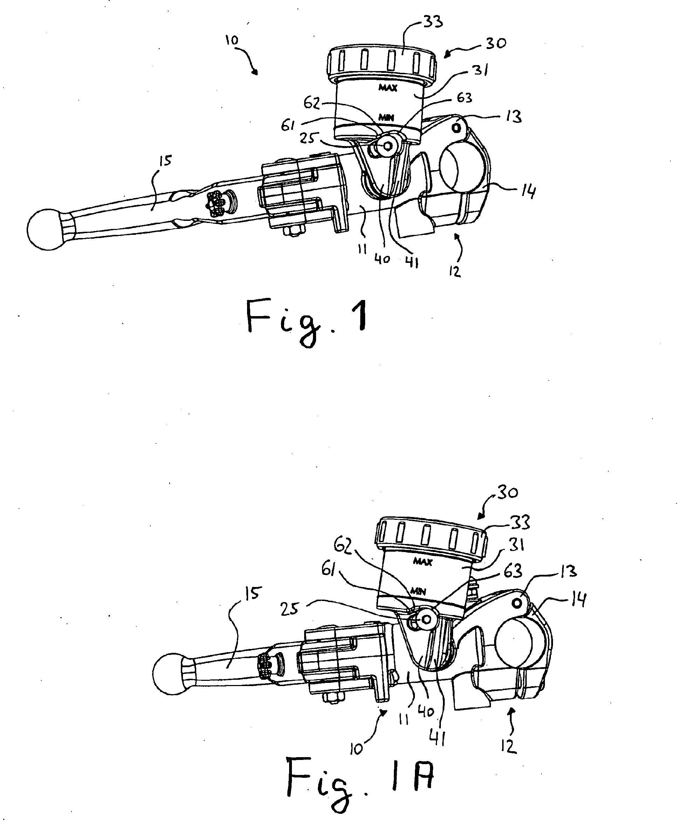

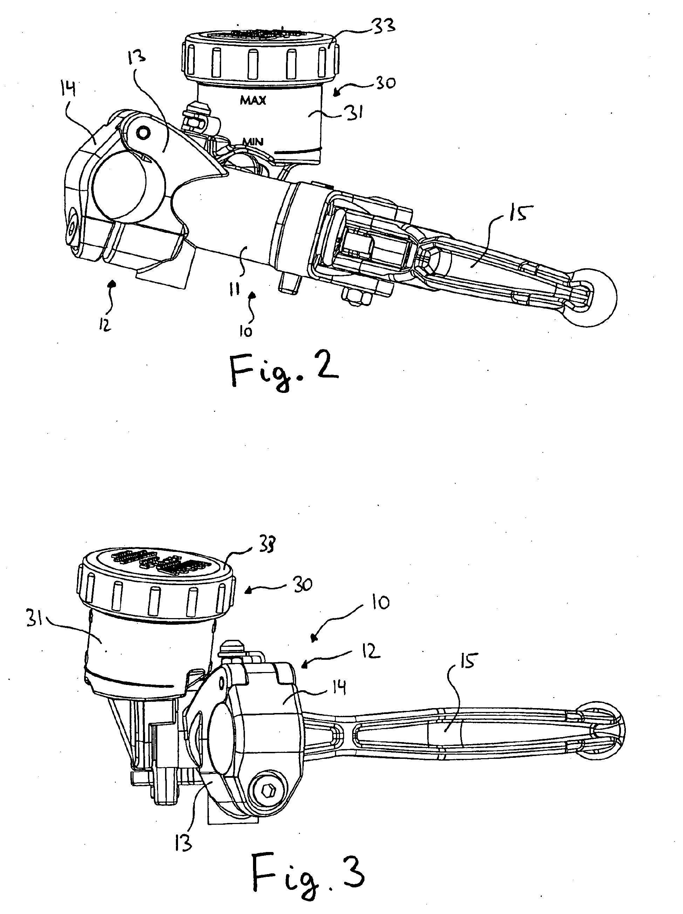

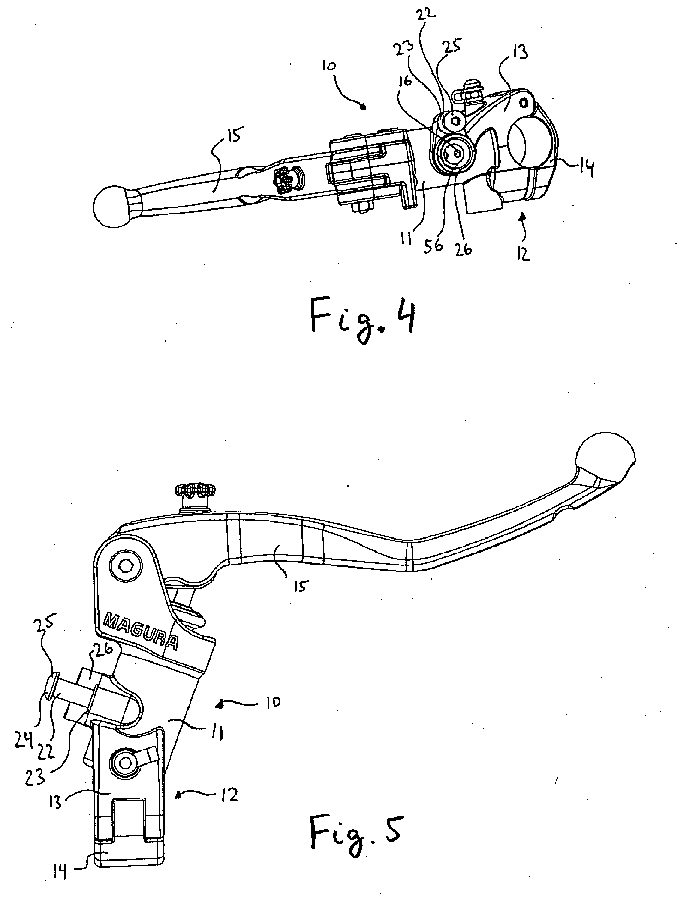

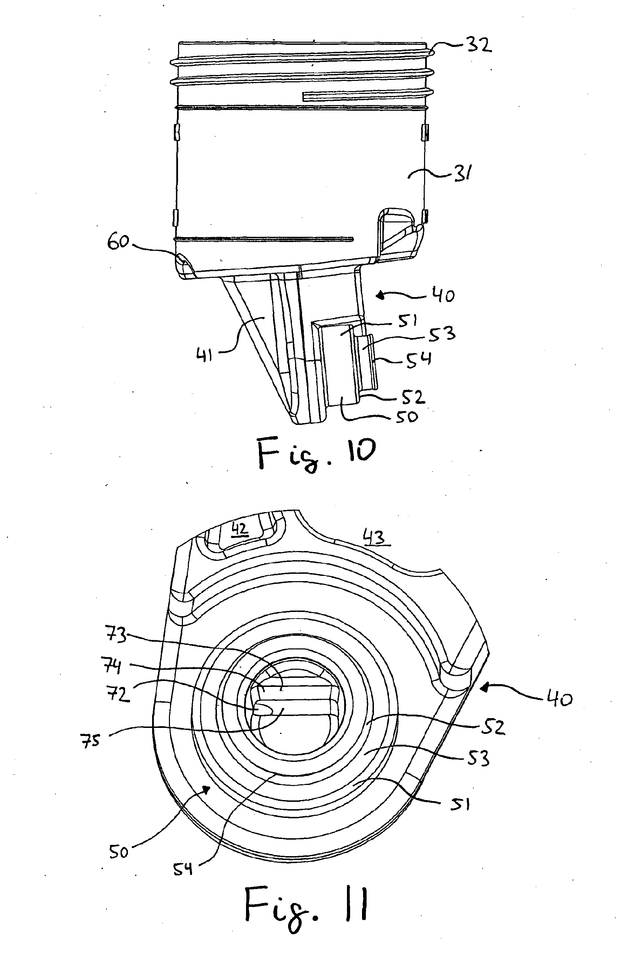

Die Figuren 1 bis 11 zeigen eine Betätigungsvorrichtung für eine hydraulische Fahrzeughandbremse oder Kupplungseinrichtung.

Die Betätigungsvorrichtung umfasst eine Armatur 10, einen Ausgleichsbehälter 30 für Hydraulikflüssigkeit, und Befestigungsmittel zum Befestigen des Ausgleichsbehälters 30 an der Armatur 10.

Die Armatur 10 weist einen Geberzylinder 11 und einen Befestigungsabschnitt 12 zur Anordnung an einem nicht dargestellten Lenker mit einer Aufnahme 13 und einem Bügel 14 auf. Ferner umfasst die Betätigungsvorrichtung einen Hebel 15 zur Betätigung der nicht dargestellten Bremse bzw. Kupplung auf bekannte Weise.

Der Ausgleichsbehälter 30 ist um eine Schwenkachse verschwenkbar, derart, dass der Ausgleichsbehälter 30 innerhalb eines Verschwenkbereichs in verschiedenen Ausrichtungen relativ zu der Armatur 10 an der Armatur 10 befestigbar ist.

Die Befestigungsmittel umfassen einen Stutzen 50 und eine Stutzenaufnahme 26, wobei zur Befestigung des Ausgleichsbehälters 30 der Stutzen 50 in der Stutzenaufnahme 26 aufgenommen ist.

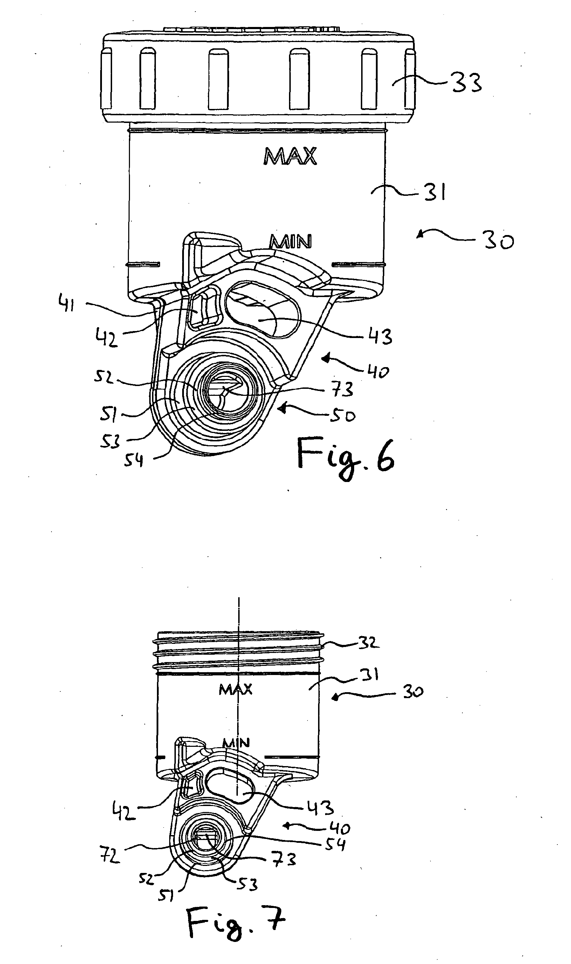

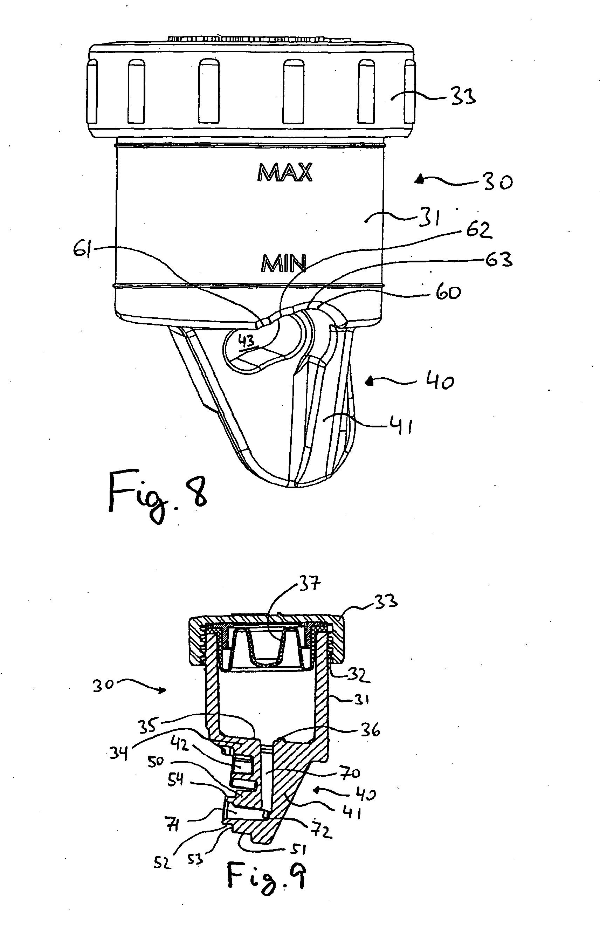

Die Schwenkachse ist im wesentlichen durch die Achse des in den Figuren 6 und 9 besonders deutlich gezeigten Stutzens 50 bzw. der Stutzenaufnahme 26 definiert, die den Stutzen zur Befestigung des Ausgleichsbehälters 30 im wesentlichen konzentrisch aufnimmt.

Der Stutzen 50 ist in der Stutzenaufnahme 26 um die Schwenkachse verschwenkbar aufgenommen. Bei dem gezeigten Ausführungsbeispiel ist der Stutzen 50 an dem Ausgleichsbehälter 30 und die Stutzenaufnahme 26 an der Armatur 10 angeordnet. Bei einer nicht gezeigten Ausführung könnte der Stutzen auch an der Armatur und die Stutzenaufnahme an dem Ausgleichsbehälter angeordnet sein.

Der Ausgleichsbehälter 30 ist seitlich an der Armatur 10 befestigt. Das ist bislang noch nicht bekannt und bietet den Vorteil, dass der Ausgleichsbehälter 30 gemäß dem gezeigten Ausführungsbeispiel verschwenkbar ausgebildet werden kann.

Die Befestigungsmittel umfassen Sicherungsmittel zum Sichern des Ausgleichsbehälters an der Armatur. Die Sicherungsmittel umfassen eine Schraube 24, die in einem Langloch 43 angeordnet ist, das den Schwenkbereich definiert.

Bei dem gezeigten Ausführungsbeispiel greift die Schraube 24 zur Sicherung des Ausgleichsbehälters 30 an der Armatur 10 in ein Gewinde ein, das an der Armatur 10 ausgebildet ist. Das Langloch 43 ist an dem Ausgleichsbehälter 30 ausgebildet.

Gemäß einem nicht gezeigten Ausführungsbeispiel kann die Schraube zur Sicherung des Ausgleichsbehälters an der Armatur auch in ein Gewinde eingreifen, das an dem Ausgleichsbehälter ausgebildet ist, und das Langloch kann entsprechend an der Armatur ausgebildet sein.

Die Befestigungsmittel weisen einen Bund 23 auf, der an der Distanzhülse 22 vorgesehen ist, die die Schraube 24 umgibt. Das hat den Vorteil, dass die Distanzhülse sehr dünnwandig ausgebildet werden kann, wodurch Gewicht bzw. Bauraum eingespart werden kann. Außerdem ergibt sich eine leichtere Verstellbarkeit des Ausgleichsbehälters 30. Der Bund 23 bietet eine Abstützfläche für einen Abschnitt des Ausgleichsbehälters 30.

Insbesondere kann der Bund 23 über die Fläche der Armatur 10 hinausragen, an der er sich abstützt. Dadurch ergibt sich eine Vergrößerung der Abstützfläche und ein kleinerer Bauraum.

Die Distanzhülse weist eine Wandstärke von 2/10 bis 20/10 mm, vorzugsweise 2/10 bis 10/10 mm, insbesondere vorzugsweise von ungefähr 4/10 mm auf. Durch die geringe Wandstärke ergibt sich der Vorteil, dass die Betätigungsvorrichtung an bestehende Armaturen anpassbar ist, insbesondere wenn wenig Bauraum zur Verfügung steht. Selbstverständlich kann die Distanzhülse auch eine größere Wandstärke aufweisen. Bei großen Wandstärken kann beispielsweise auf den Bund verzichtet werden.

Der Verschwenkbereich umfasst einen Winkelbereich von 0 bis 90 Grad, vorzugsweise von 0 bis 45 Grad, insbesondere vorzugsweise von 0 bis 30 Grad, und bevorzugt von 0 bis ungefähr 21 Grad.

Bei einem nicht gezeigten Ausführungsbeispiel ist die relative Ausrichtung zwischen der Armatur und dem Ausgleichsbehälter innerhalb des Verschwenkbereichs stufenlos einstellbar. Bei dem gezeigten Ausführungsbeispiel ist die relative Ausrichtung zwischen der Armatur 10 und dem Ausgleichsbehälter 30 innerhalb des Verschwenkbereichs in einer bestimmten Anzahl von Einstellungen einstellbar. Dazu sind 3 Einstellungen vorgesehen, die durch Rastierungen definiert sind. Selbstverständlich können auch mehr oder weniger Einstellungen vorgesehen werden. Die Einstellungen sind durch eine Kontur 60 definiert, die Bogenabschnitte 61, 62, 63 umfasst, die in den Einstellungen einen Schraubenkopf 25 der Befestigungsmittel aufnehmen. Bei dem Ausführungsbeispiel sind 3 Rastierungen, entsprechend drei Einstellungen durch 3 aufeinanderfolgende Radien vorgesehen, die am Ausgleichsbehälter 30 ausgebildet sind.

Die gezeigte Betätigungsvorrichtung umfasst eine schrägradiale Armatur ist. Der Neigungswinkel der schrägradialen Armatur beträgt ungefähr 10 Grad, kann aber auch 5 bis 20 Grad betragen.

Der Ausgleichsbehälter 30 umfasst eine Verbindungsbohrung 70 und eine damit verbundene Anschlussbohrung 71, die über eine Bohrung 16 auf bekannte Weise mit dem Geberzylinder in Verbindung steht. Der Durchgang 72 von der Anschlussbohrung 71 zu der Verbindungsbohrung 70 ist seitlich von der Mitte der Anschlussbohrung 71 vorgesehen.

Die Anschlussbohrung 71 weist an ihrem der Befestigungsseite des Ausgleichsbehälters 30 abgewandten Ende eine Stufe 73 auf, in der der Durchgang 72 zu der Verbindungsbohrung 70 vorgesehen ist. Die Stufe 73 weist in Richtung ihres der Befestigungsseite des Ausgleichsbehälters 30 abgewandten Endes eine erhöhte Neigung auf. Dadurch ergibt sich der Vorteil bei der Herstellung gemäß dem Spritzgussverfahren, insofern kein Grat im Durchgang stehenbleibt, weil ein hoher Druck zwischen den beiden Kernen für die Verbindungsbohrung 70 bzw. die Anschlussbohrung 71 aufrechterhalten werden kann. Der Kern für die Verbindungsbohrung 70 rutscht auf dem Kern für die Anschlussbohrung 71 ab und von der Befestigungsseite weg. Der hohe Druck verhindert das Entstehen eines Grates. Ein Arbeitsschritt zum Entfernen eines etwaigen Grates, der den Durchgang blockiert, entfällt.

Die Stufe 73 weist einen ersten Abschnitt 74 mit einer ersten Neigung und einen zweiten Abschnitt 75 mit einer zweiten Neigung auf, die größer als die erste Neigung ist. Der Durchgang 72 ist an der Seite des zweiten Abschnitts 75 vorgesehen.

Die Anschlussbohrung 71 ist im wesentlichen kegelstumpfförmig ausgebildet und die Neigung des ersten Abschnitts 74 der Stufe 75 entspricht ungefähr der Neigung der Anschlussbohrung 71. Die Neigung des zweiten Abschnitts 75 der Stufe 73 weist in Richtung des der Befestigungsseite des Ausgleichsbehälters 30 abgewandten Endes der Stufe 73 eine zunehmende Steigung auf. Die Neigung kann aber auch gleichbleibend sein.

Die Neigung des ersten Abschnitts 74 der Stufe 73 beträgt ungefähr 2 bis 3 Grad, kann aber auch beispielsweise 0 bis 5 Grad betragen.

De Neigung des zweiten Abschnitts 75 der Stufe 73 beträgt ungefähr 10 bis 15 Grad, kann aber auch beispielsweise ungefähr 3 bis 30 Grad bzw. ungefähr 7 bis 20 Grad betragen.

Der Ausgleichsbehälter 30 weist einen Fortsatz 40 auf, an dem der Stutzen 50 zur Befestigung an der Armatur 10 angeordnet ist. Der Stutzen weist ersten Abschnitt 51 und einen zweiten Abschnitt 52 geringeren Durchmessers zur Aufnahme eines Dichtungslement 56 (insbesondere O-Rings) auf. Zwischen dem ersten Abschnitt 51 und dem zweiten Abschnitt 52 ist eine Stufe 53 ausgebildet. An dem der Befestigungsseite des Ausgleichsbehälters 30 zugewandten Endes des zweiten Abschnitts 52 geringeren Durchmessers ist eine Erweiterung 54 größeren Durchmessers vorgesehen. Der Durchmesser der Erweiterung 54 relativ zu dem Durchmesser des zweiten Abschnitts 52 geringeren Durchmessers ist derart bemessen ist, dass einerseits die Erweiterung 54 bei einem Spritzgussverfahren zur Herstellung des Ausgleichbehälters 30 zwangsentformbar ist und andererseits ein Dichtungselement 56 durch die Erweiterung 54 relativ verliersicher auf dem zweiten Abschnitt 52 geringeren Durchmessers anordbar ist. Das hat den Vorteil, dass kein separater Arbeitsgang erforderlich ist, um eine verliersichere Aufnahme für das Dichtungselement 56 auszubilden. Das Dichtungselement 56 kann zur Montage des Ausgleichsbehälters 30 auf diesem angeordnet werden. Das Dichtungselement 56 wird relativ verliersicher gehalten, d.h. auf jeden Fall ausreichend sicher für die Montage des Ausgleichbehälters.

In dem Ausgleichsbehälter 30 ist ein Langloch 43 zur Aufnahme der Schraube 24 zur Sicherung des Ausgleichsbehälters 30 an der Armatur 10 vorgesehen.

Der Ausgleichsbehälter 30 weist einen Fortsatz 40 und eine daran angeordnete Versteifungsrippe 41 auf, wobei die Verbindungsbohrung 70 in der Versteifungsrippe 41 vorgesehen ist.

Der Ausgleichsbehälter 30 ist im übrigen auf bekannte Weise aufgebaut. Er weist eine Zylinderwandung 31, ein Aussengewinde 32 zur Aufnahme eines Deckels 33, einen Boden 34, Rippen 35 und 36 sowie eine Membran 37 auf. Die Funktion und Arbeitsweise eines Ausgleichsbehälters und der Betätigungsvorrichtung ist dem Fachmann im übrigen bekannt.

## Patentansprüche

1. Betätigungsvorrichtung für eine hydraulische Fahrzeughandbremse oder Kupplungseinrichtung mit
einer Armatur (10), die einen Geberzylinder (11) und einen Befestigungsabschnitt (12) zur Anordnung an einem Lenker aufweist,
einem Ausgleichsbehälter (30) für Hydraulikflüssigkeit, und
Befestigungsmitteln zum Befestigen des Ausgleichsbehälters (30) an der Armatur (10),
wobei der Ausgleichsbehälter (30) um eine Schwenkachse verschwenkbar ist, derart, dass der Ausgleichsbehälter (30) innerhalb eines Verschwenkbereichs in verschiedenen Ausrichtungen relativ zu der Armatur (10) an der Armatur (10) befestigbar ist, und
wobei die Befestigungsmittel Sicherungsmittel zum Sichern des Ausgleichsbehälters (30) an der Armatur (10) umfassen,
**dadurch gekennzeichnet, dass** die Sicherungsmittel eine Schraube (24) umfassen, die in einem Langloch (43) angeordnet ist, das den Schwenkbereich definiert.

2. Betätigungsvorrichtung nach Anspruch 1, bei der die Befestigungsmittel einen Stutzen (50) und eine Stutzenaufnahme (26) umfassen, wobei zur Befestigung des Ausgleichsbehälters (30) der Stutzen (50) in der Stutzenaufnahme (26) aufgenommen ist.

3. Betätigungsvorrichtung nach Anspruch 2, bei der der Stutzen (50) in der Stutzenaufnahme (26) um die Schwenkachse verschwenkbar aufgenommen ist.

4. Betätigungsvorrichtung nach Anspruch 2 oder 3, bei der der Stutzen (50) an dem Ausgleichsbehälter (30) und die Stutzenaufnahme (26) an der Armatur (10) angeordnet ist.

5. Betätigungsvorrichtung nach Anspruch 2 oder 3, bei der der Stutzen an der Armatur und die Stutzenaufnahme an dem Ausgleichsbehälter angeordnet ist.

6. Betätigungsvorrichtung nach einem der vorhergehenden Ansprüche, bei der der Ausgleichsbehälter (30) seitlich an der Armatur (10) befestigt ist.

7. Betätigungsvorrichtung nach einem der vorhergehenden Ansprüche, bei der die Schraube (24) zur Sicherung des Ausgleichsbehälters (30) an der Armatur (10) in ein Gewinde eingreift, das an der Armatur (10) ausgebildet ist, und das Langloch (43) an dem Ausgleichsbehälter (30) ausgebildet ist.

8. Betätigungsvorrichtung nach einem der vorhergehenden Ansprüche, bei der die Schraube zur Sicherung des Ausgleichsbehälters an der Armatur in ein Gewinde eingreift, das an dem Ausgleichsbehälter ausgebildet ist, und das Langloch an der Armatur ausgebildet ist.

9. Betätigungsvorrichtung nach einem der vorhergehenden Ansprüche, bei der die Befestigungsmittel einen Bund (23) aufweisen, der an einer Distanzhülse (22) vorgesehen ist.

10. Betätigungsvorrichtung nach dem vorhergehenden Anspruch, bei der der Bund (23) eine Abstützfläche für einen Abschnitt des Ausgleichsbehälters (30) bietet.

11. Betätigungsvorrichtung nach einem der vorhergehenden Ansprüche, bei der die Befestigungsmittel eine Distanzhülse (22) umfassen.

12. Betätigungsvorrichtung nach dem vorhergehenden Anspruch, bei der die Distanzhülse (22) die Schraube (24) zur Sicherung umgibt.

13. Betätigungsvorrichtung nach einem der Ansprüche 11 bis 14, bei der die Distanzhülse (22) eine Wandstärke von 2/10 bis 20/10 mm, vorzugsweise 2/10 bis 10/10 mm, insbesondere vorzugsweise von ungefähr 4/10 mm aufweist.

14. Betätigungsvorrichtung nach einem der vorhergehenden Ansprüche, bei der der Verschwenkbereich einen Winkelbereich von 0 bis 90 Grad, vorzugsweise von 0 bis 45 Grad, insbesondere vorzugsweise von 0 bis 30 Grad, und bevorzugt von 0 bis ungefähr 21 Grad umfasst.

15. Betätigungsvorrichtung nach einem der vorhergehenden Ansprüche, bei der die relative Ausrichtung zwischen der Armatur (10) und dem Ausgleichsbehälter (30) innerhalb des Verschwenkbereichs stufenlos einstellbar ist.

16. Betätigungsvorrichtung nach einem der vorhergehenden Ansprüche, bei der die relative Ausrichtung zwischen der Armatur (10) und dem Ausgleichsbehälter (30) innerhalb des Verschwenkbereichs in einer bestimmten Anzahl von Einstellungen einstellbar ist.

17. Betätigungsvorrichtung nach dem vorhergehenden Anspruch, bei der mindestens 2, vorzugsweise mindestens 3, insbesondere vorzugsweise mindestens 5, mindestens 7 oder mindestens 10 Einstellungen vorgesehen sind.

18. Betätigungsvorrichtung nach einem der beiden vorhergehenden Ansprüche, bei der die Einstellungen durch Rastierungen definiert sind.

19. Betätigungsvorrichtung nach einem der drei vorhergehenden Ansprüche, bei der die Einstellungen durch eine Kontur (60) definiert sind, die Bogenabschnitte (61, 62, 63) umfasst, die in den Einstellungen einen Schraubenkopf (25) der Befestigungsmittel aufnehmen.

20. Betätigungsvorrichtung nach einem der vorhergehenden Ansprüche, bei der die Armatur (10) einen Neigungswinkel aufweist.

21. Betätigungsvorrichtung nach dem vorhergehenden Anspruch, bei der der Neigungswinkel ungefähr 5 bis 20 Grad und vorzugsweise ungefähr 10 Grad beträgt.

22. Betätigungsvorrichtung nach einem der vorhergehenden Ansprüche, wobei der Ausgleichsbehälter (30) eine Verbindungsbohrung (70) und eine damit verbundene Anschlussbohrung (71) aufweist, **dadurch gekennzeichnet, dass** der Durchgang von der Anschlussbohrung (71) zu der Verbindungsbohrung (70) seitlich von der Mitte der Anschlussbohrung (71) vorgesehen ist.

23. Betätigungsvorrichtung nach Anspruch 22, bei der die Anschlussbohrung (71) an ihrem der Befestigungsseite des Ausgleichsbehälters (30) abgewandten Ende eine Stufe (73) aufweist, in der der Durchgang zu der Verbindungsbohrung (70) vorgesehen ist.

24. Betätigungsvorrichtung nach Anspruch 23, bei der die Stufe (73) in Richtung ihres der Befestigungsseite des Ausgleichsbehälters (30) abgewandten Endes eine erhöhte Neigung aufweist.

25. Betätigungsvorrichtung nach einem der Ansprüche 23 bis 24, bei der die Stufe (73) einen ersten Abschnitt (74) mit einer ersten Neigung und einen zweiten Abschnitt (75) mit einer zweiten Neigung aufweist, die größer als die erste Neigung ist.

26. Betätigungsvorrichtung nach Anspruch 25, bei der die Anschlussbohrung (71) im wesentlichen kegelstumpfförmig ausgebildet ist und die Neigung des ersten Abschnitts (74) der Stufe (73) ungefähr der Neigung der Anschlussbohrung (71) entspricht.

27. Betätigungsvorrichtung nach einem der Ansprüche 25 bis 26, bei der die Neigung des zweiten Abschnitts (75) der Stufe (73) in Richtung des der Befestigungsseite des Ausgleichsbehälters (30) abgewandten Endes der Stufe (73) eine zunehmende Steigung aufweist.

28. Betätigungsvorrichtung nach einem der Ansprüche 25 bis 27, bei der die Neigung des ersten Abschnitts (74) der Stufe (73) ungefähr 2 bis 5 Grad, vorzugsweise ungefähr 2 bis 3 Grad beträgt.

29. Betätigungsvorrichtung nach einem der Ansprüche 25 bis 28, bei der die Neigung des zweiten Abschnitts (75) der Stufe (73) ungefähr 3 bis 30 Grad, vorzugsweise ungefähr 7 bis 20 Grad und insbesondere vorzugsweise 10 bis 15 Grad beträgt.

30. Betätigungsvorrichtung nach einem der Ansprüche 22 bis 29, wobei der Ausgleichsbehälter (30), einen Fortsatz (40) aufweist, an dem ein Stutzen (50) zur Befestigung an einer Armatur (10) und/oder eine Versteifungsrippe (41) angeordnet ist,
wobei die Verbindungsbohrung (70) in der Versteifungsrippe (41) vorgesehen ist.

31. Betätigungsvorrichtung nach Anspruch 30, bei der der Stutzen (50) einen Abschnitt (51) geringeren Durchmessers zur Aufnahme eines Dichtungslement (56) aufweist.

32. Betätigungsvorrichtung nach Anspruch 31, bei der an dem der Befestigungsseite des Ausgleichsbehälters (30) zugewandten Endes des Abschnitts (51) geringeren Durchmessers eine Erweiterung größeren Durchmessers vorgesehen ist.

33. Betätigungsvorrichtung nach Anspruch 32, bei der der Durchmesser der Erweiterung relativ zu dem Durchmesser des Abschnitts (51) geringeren Durchmessers derart bemessen ist, dass einerseits die Erweiterung bei einem Spritzgussverfahren zur Herstellung des Ausgleichbehälters (30) zwangsentformbar ist und andererseits ein Dichtungselement (56) durch die Erweiterung relativ verliersicher auf dem Abschnitt (51) geringeren Durchmessers anordbar ist.

34. Betätigungsvorrichtung nach einem der Ansprüche 22 bis 33, wobei der Ausgleichsbehälter (30) eine Einstellvorrichtung zur Einstellung der relativen Ausrichtung des Ausgleichsbehälters (30) an der Betätigungsvorrichtung innerhalb eines Verschwenkbereichs in einer bestimmten Anzahl von Einstellungen aufweist.

35. Betätigungsvorrichtung nach Anspruch 34, bei der mindestens 2, vorzugsweise mindestens 3, insbesondere vorzugsweise mindestens 5, mindestens 7 oder mindestens 10 Einstellungen vorgesehen sind.

## Claims

1. An actuating device for a hydraulic vehicle hand brake or clutch device comprising
an armature (10) which includes a master cylinder (11) and a fixing section (12) for attachment to an arm,
a compensation reservoir (30) for hydraulic fluid, and
fixing means for fixing the compensation reservoir (30) to the armature (10),
wherein the compensation reservoir (30) can be pivoted about a pivoting axis such that the compensation reservoir (30) can be fixed to the armature (10) within a pivoting range in various orientations relative to the armature (10), and
wherein the fixing means comprise securing means for securing the compensation reservoir (30) to the armature (10),
**characterized in that** the securing means comprise a screw (24) which is arranged in an elongated hole (43) defining the pivoting range.

2. The actuating device according to claim 1, wherein the fixing means comprise a connecting piece (50) and a connecting piece attachment (26), the connecting piece (50) being received in the connecting piece attachment (26) to mount the compensation reservoir (30).

3. The actuating device according to claim 2, wherein the connecting piece (50) is received in the connecting piece attachment (26) so as to be pivotable about the pivoting axis.

4. The actuating device according to claim 2 or 3, wherein the connecting piece (50) is mounted on the compensation reservoir (30) and the connecting piece attachment (26) is mounted on the armature (10).

5. The actuating device according to claim 2 or 3, wherein the connecting piece is mounted on the armature and the connecting piece attachment is mounted on the compensation reservoir.

6. The actuating device according to any of the preceding claims, wherein the compensation reservoir (30) is fixed laterally to the armature (10).

7. The actuating device according to any of the preceding claims, wherein the screw (24) meshes with a thread to secure the compensation reservoir (30) to the armature, said thread being formed on the armature (10), and the elongated hole (43) is formed on the compensation reservoir (30).

8. The actuating device according to any of the preceding claims, wherein the screw meshes with a thread to secure the compensation reservoir to the armature, said thread being formed on the compensation reservoir, and the elongated hole is formed on the armature.

9. The actuating device according to any of the preceding claims, wherein the fixing means have a collar (23) provided at a distance sleeve (22).

10. The actuating device according to the preceding claim, wherein the collar (23) offers a support surface for a section of the compensation reservoir (30).

11. The actuating device according to any of the preceding claims, wherein the fixing means comprise a distance sleeve (22).

12. The actuating device according to the preceding claim, wherein the distance sleeve (22) surrounds the screw (24) for the purpose of securing.

13. The actuating device according to any of claims 11 to 14, wherein the distance sleeve (22) has a wall thickness of 2/10 to 20/10 mm, preferably 2/10 to 10/10 mm, in particular preferably about 4/10 mm.

14. The actuating device according to any of the preceding claims, wherein the pivoting range comprises an angular range of 0 to 90 degrees, preferably 0 to 45 degrees, in particular preferably 0 to 30 degrees and preferentially 0 to about 21 degrees.

15. The actuating device according to any of the preceding claims, wherein the relative orientation between the armature (10) and the compensation reservoir (30) is infinitely variable within the pivoting range.

16. The actuating device according to any of the preceding claims, wherein the relative orientation between the armature (10) and the compensation reservoir (30) is adjustable within the pivoting range with a certain number of adjustments.

17. The actuating device according to the preceding claim, wherein at least 2, preferably at least 3, in particular preferably at least 5, at least 7 or at least 10 adjustments are provided.

18. The actuating device according to any of the two preceding claims, wherein the adjustments are defined by locking systems.

19. The actuating device according to any of the three preceding claims, wherein the adjustments are defined by a contour (60) comprising arc portions (61, 62, 63) which in the adjustments receive a screw head (25) of the fixing means.

20. The actuating device according to any of the preceding claims, wherein the armature (10) has an angle of inclination.

21. The actuating device according to the preceding claim, wherein the angle of inclination is about 5 to 20 degrees and preferably about 10 degrees.

22. The actuating device according to any of the preceding claims, wherein the compensation reservoir (30) includes a joining bore (70) and a connecting bore (71) communicating therewith, **characterized in that** the passage from the connecting bore (71) to the joining bore (70) is provided laterally from the center of the connecting bore (71).

23. The actuating device according to claim 22, wherein the connecting bore (71) has a step (73) at its end facing away from the fixing side of the compensation reservoir (30), the passage to the joining bore (70) being provided in said step.

24. The actuating device according to claim 23, wherein the step (73) has an increased inclination towards its end facing away from the fixing side of the compensation reservoir (30).

25. The actuating device according to any of claims 23 to 24, wherein the step (73) comprises a first section (74) having a first inclination and a second section (75) having a second inclination which is greater than the first inclination.

26. The actuating device according to claim 25, wherein the connecting bore (71) is substantially truncated cone shaped and the inclination of the first section (74) of step (73) corresponds approximately to the inclination of the connecting bore (71).

27. The actuating device according to any of claims 25 to 26, wherein the inclination of the second section (75) of step (73) has an increasing ascending slope towards the end of step (73) that faces away from the fixing side of the compensation reservoir (30).

28. The actuating device according to any of claims 25 to 27, wherein the inclination of the first section (74) of step (73) is about 2 to 5 degrees, preferably about 2 to 3 degrees.

29. The actuating device according to any of claims 25 to 28, wherein the inclination of the second section (75) of step (73) is about 3 to 30 degrees, preferably about 7 to 20 degrees and in particular preferably 10 to 15 degrees.

30. The actuating device according to any of claims 22 to 29, wherein the compensation reservoir (30) has an extension (40) where a connecting piece (50) for fixation to an armature (10) and/or a reinforcing rib (41) is mounted, the joining bore (70) being provided in the reinforcing rib (41).

31. The actuating device according to claim 30, wherein the connecting piece (50) has a section (51) of smaller diameter to receive a sealing member (56).

32. The actuating device according to claim 31, wherein an extension of greater diameter is provided at the end, facing the fixing side of the compensation reservoir (30), of the section (51) of smaller diameter.

33. The actuating device according to claim 32, wherein the diameter of the extension is dimensioned relative to the diameter of the section (51) of smaller diameter such that, on the one hand, the extension is forced-demoldable in an injection molding process for the production of the compensation reservoir (30) and, on the other hand, a sealing member (56) can be arranged in a relatively lose-proof way on section (51) of smaller diameter by the extension (51).

34. The actuating device according to any of claims 22 to 33, wherein the compensation reservoir (30) has an adjustment device for adjusting the relative orientation of the compensation reservoir (30) along the actuation device within a pivoting range in a certain number of adjustments.

35. The actuating device according to claim 34, wherein at least 2, preferably at least 3, in particular at least 3, in particular preferably at least 5, at least 7 or at least 10 adjustments are provided.

## Revendications

1. Dispositif d'actionnement pour un frein à main hydraulique de véhicule ou pour un système d'embrayage, comprenant une armature (10) qui comprend un cylindre émetteur (11) et un tronçon de fixation (12) pour l'agencement sur un guidon,
un réservoir de compensation (30) pour un fluide hydraulique,
des moyens de fixation pour la fixation du réservoir de compensation (30) sur l'armature (10),
dans lequel le réservoir de compensation (30) est capable de pivoter autour d'un axe de pivotement de telle façon que le réservoir de compensation (30) est susceptible d'être fixé sur l'armature (10) dans différentes orientations par rapport à l'armature (10) à l'intérieur d'une plage de pivotement, et
dans lequel les moyens de fixation comprennent des moyens de blocage pour bloquer le réservoir de compensation (30) sur l'armature (10),
**caractérisé en ce que** les moyens de blocage comprennent une vis (24) qui est agencée dans un trou oblong (43), lequel définit la plage de pivotement.

2. Dispositif d'actionnement selon la revendication 1, dans lequel les moyens de fixation comprennent un embout (50) et un récepteur d'embout (26), l'embout (50) étant reçu dans le récepteur d'embout (26) pour la fixation du réservoir de compensation (30).

3. Dispositif d'actionnement selon la revendication 2, dans lequel l'embout (50) est reçu dans le récepteur d'embout (26) avec possibilité de pivotement autour de l'axe de pivotement.

4. Dispositif d'actionnement selon la revendication 2 ou 3, dans lequel l'embout (50) est agencé sur le réservoir de compensation (30) et le récepteur d'embout (26) est agencé sur l'armature (10).

5. Dispositif d'actionnement selon la revendication 2 ou 3, dans lequel l'embout est agencé sur l'armature et le récepteur d'embout est agencé sur le réservoir de compensation.

6. Dispositif d'actionnement selon l'une des revendications précédentes, dans lequel le réservoir de compensation (30) est fixé latéralement sur l'armature (10).

7. Dispositif d'actionnement selon l'une des revendications précédentes, dans lequel la vis (24) pour le blocage du réservoir de compensation (30) sur l'armature (10) s'engage dans un pas de vis qui est réalisé sur l'armature (10), et le trou oblong (43) est réalisé sur le réservoir de compensation (30).

8. Dispositif d'actionnement selon l'une des revendications précédentes, dans lequel la vis pour le blocage du réservoir de compensation sur l'armature s'engage dans un pas de vis qui est réalisé sur le réservoir de compensation, et le trou oblong est réalisé sur l'armature.

9. Dispositif d'actionnement selon l'une des revendications précédentes, dans lequel les moyens de fixation comprennent une collerette (23) qui est prévue sur une douille d'écartement (22).

10. Dispositif d'actionnement selon la revendication précédente, dans lequel la collerette (23) présente une surface de soutien pour un tronçon du réservoir de compensation (30).

11. Dispositif d'actionnement selon l'une des revendications précédentes, dans lequel les moyens de fixation comprennent une douille d'écartement (22).

12. Dispositif d'actionnement selon la revendication précédente, dans lequel la douille d'écartement (22) entoure la vis (24) pour le blocage.

13. Dispositif d'actionnement selon l'une des revendications 11 à 14, dans lequel la douille d'écartement (22) présente une épaisseur de paroi de 2/10 à 20/10 mm, de préférence 2/10 à 10/10 mm, et en particulier de préférence d'environ 4/10 mm.

14. Dispositif d'actionnement selon l'une des revendications précédentes, dans lequel la plage de pivotement englobe une plage angulaire de 0 à 90°, de préférence de 0 à 45°, en particulier de préférence de 0 à 30°, et de façon préférée de 0 à environ 21°.

15. Dispositif d'actionnement selon l'une des revendications précédentes, dans lequel l'orientation relative entre l'armature (10) et le réservoir de compensation (30) est réglable en continu à l'intérieur de la plage de pivotement.

16. Dispositif d'actionnement selon l'une des revendications précédentes, dans lequel l'orientation relative entre l'armature (10) et le réservoir de compensation (30) est réglable à l'intérieur de la plage de pivotement dans un nombre déterminé de positions de réglage.

17. Dispositif d'actionnement selon la revendication précédente, dans lequel il est prévu au moins 2, de préférence au moins 3, en particulier de manière préférée au moins 5, au moins 7 ou au moins 10 positions de réglage.

18. Dispositif d'actionnement selon l'une des deux revendications précédentes, dans lequel les positions de réglage sont définies par des moyens d'enclenchement.

19. Dispositif d'actionnement selon l'une des trois revendications précédentes, dans lequel les positions de réglage sont définies par un contour (60) qui comprend des tronçons d'arc (61, 62, 63) qui reçoivent, dans les positions de réglage, une tête de vis (25) des moyens de fixation.

20. Dispositif d'actionnement selon l'une des revendications précédentes, dans lequel l'armature (10) présente un angle d'inclinaison.

21. Dispositif d'actionnement selon la revendication précédente, dans lequel l'angle d'inclinaison s'élève à environ 5 à 20° et de préférence environ 10°.

22. Dispositif d'actionnement selon l'une des revendications précédentes, dans lequel le réservoir de compensation (30) comporte un perçage de liaison (70) et un perçage de raccordement (71) relié à celui-ci, **caractérisé en ce que** la traversée du perçage de raccordement (71) au perçage de liaison (70) est prévue latéralement depuis le milieu du perçage de raccordement (71).

23. Dispositif d'actionnement selon la revendication 22, dans lequel le perçage de raccordement (71) comporte, à son extrémité détournée du côté de fixation du réservoir de compensation (30), un gradin dans lequel est prévue la traversée vers le perçage de liaison (70).

24. Dispositif d'actionnement selon la revendication 23, dans lequel le gradin (73) présente, à son extrémité détournée du côté de fixation du réservoir de compensation (30), une inclinaison plus forte.

25. Dispositif d'actionnement selon l'une des revendications 22 3/1/24, dans lequel le gradin (73) comprend un premier tronçon (74) avec une première inclinaison et un second tronçon (75) avec une seconde inclinaison qui est supérieure à la première inclinaison.

26. Dispositif d'actionnement selon la revendication 25, dans lequel le perçage de raccordement (71) est réalisé sensiblement en forme de tronc de cône, et l'inclinaison du premier tronçon (74) du gradin (73) correspond environ à l'inclinaison du perçage de raccordement (71).

27. Dispositif d'actionnement selon l'une des revendications 25 à 26, dans lequel l'inclinaison du second tronçon (75) du gradin (73) présente une pente croissante en direction de l'extrémité du gradin (73) détournée du côté de fixation du réservoir de compensation (30).

28. Dispositif d'actionnement selon l'une des revendications 25 à 27, dans lequel l'inclinaison du premier tronçon (74) du gradin (73) est approximativement de 2 à 5 degrés, de préférence approximativement de 2 à 3 degrés.

29. Dispositif d'actionnement selon l'une des revendications 25 à 28, dans lequel l'inclinaison du second tronçon (75) du gradin (73) est approximativement de 3 à 30°, de préférence approximativement 7 à 20°, et en particulier de préférence 10 à 15°.

30. Dispositif d'actionnement selon l'une des revendications 22 à 29, dans lequel le réservoir de compensation (30) comporte un prolongement (40) sur lequel est agencé un embout (50) pour la fixation sur une armature (10) et/ou une nervure de renforcement (41), et dans lequel le perçage de liaison (70) est prévue dans la nervure de renforcement (41).

31. Dispositif d'actionnement selon la revendication 30, dans lequel l'embout (50) comporte un tronçon (51) de diamètre réduit pour recevoir un élément d'étanchement (56).

32. Dispositif d'actionnement selon la revendication 31, dans lequel un élargissement de grand diamètre est prévu à l'extrémité du tronçon (51) de diamètre réduit tournée vers le côté de fixation du réservoir de compensation (30).

33. Dispositif d'actionnement selon la revendication 32, dans lequel le diamètre de l'élargissement est choisi, par rapport au diamètre du tronçon (51) de diamètre réduit, de telle manière que d'une part l'élargissement est démoulable à force lors d'un procédé de moulage-injection pour la fabrication du réservoir de compensation (30), et que d'autre part un élément d'étanchement (56) est susceptible d'être agencé à travers l'élargissement sur le tronçon (51) de diamètre réduit d'une manière relativement imperdable.

34. Dispositif d'actionnement selon l'une des revendications 22 à 33, dans lequel le réservoir de compensation (30) comprend un dispositif de réglage pour régler l'orientation relative du réservoir de compensation (30) sur le dispositif d'actionnement à l'intérieur d'une plage de pivotement dans un nombre déterminé de positions de réglage.

35. Dispositif d'actionnement selon la revendication 34, dans lequel il est prévu au moins 2, de préférence au moins 3, en particulier de préférence au moins 5, au moins 7 ou au moins 10 positions de réglage.
